# EUROPEAN PATENT APPLICATION

(11) **EP 4 625 891 A1**
(43) Date of publication of application: **01.10.2025**
(21) Application number: 22966569.0
(22) Date of filing: 25.11.2022
(51) Int. Cl.: H04L 12/40, H04L 9/40

(54) **SIGNAL PROCESSING SYSTEM FOR VEHICLE, AND VEHICLE COMPRISING SAME**

(71) Applicant: LG Electronics Inc., Yeongdeungpo-gu Seoul 07336 (KR)
(72) Inventor: PARK, Junsang, Seoul 06772 (KR); CHO, Chaeguk, Seoul 06772 (KR)
(74) Representative: Vossius & Partner Patentanwälte Rechtsanwälte mbB
(86) International application number: PCT/KR2022/018790
(87) International publication number: WO 2024/111709

(57) **Abstract**

A signal processing system and a vehicle are disclosed. The signal processing system comprises: a signal processing device including an integrated intrusion detection processor to, in response to receiving a first message based on a first communication scheme, perform intrusion detection based on a first type, and in response to receiving a second message based on a second communication scheme, to perform intrusion detection; and a second signal processing device including a first intrusion detection processor to, in response to receiving the first message, perform intrusion detection based on a second type, wherein in response to receiving a first message based on the second communication scheme, the integrated intrusion detection processor performs the intrusion detection based on the first type of the first message after inspecting header and payload based on the second communication scheme. Accordingly, it is possible to reduce false detection for the received messages.

## Description

### BACKGROUND

### 1. Technical Field

The present disclosure relates to a signal processing system of a vehicle and a vehicle including the same, and more particularly to a signal processing system of a vehicle capable of efficiently performing intrusion detection on received messages, and a vehicle including the signal processing system.

### 2. Description of the Related Art

A vehicle is a machine that allows a user to move in a desired direction. A typical example of the vehicle is an automobile.

Meanwhile, a signal processing device for a vehicle is mounted in the vehicle for user convenience of users who use the vehicle.

Particularly, sensing signals from various in-vehicle sensor devices can be transmitted to at least one signal processing device via Controller Area Network (CAN) communication.

Meanwhile, CAN messages are transmitted for the CAN communication, in which in order to detect intrusion in the CAN messages, the signal processing device is required to analyze all the received CAN messages, which places an increasing burden on the processor.

Further, there is a problem of false detection for CAN messages based on Ethernet communication.

### SUMMARY

It is an objective of the present disclosure to provide a signal processing system of a vehicle capable of reducing false detection for received messages, and a vehicle including the signal processing system.

Meanwhile, it is another objective of the present disclosure to provide a signal processing system of a vehicle capable of efficiently performing intrusion detection on received messages, and a vehicle including the signal processing system.

Meanwhile, it is yet another objective of the present disclosure to provide a signal processing system of a vehicle capable of efficiently performing intrusion detection and intrusion prevention on received first messages, and a vehicle including the signal processing system.

In accordance with an aspect of the present disclosure, the above and other objectives can be accomplished by providing a signal processing system of a vehicle and a vehicle including the same, the signal processing system comprising: a signal processing device including an integrated intrusion detection processor configured to, in response to receiving a first message based on a first communication scheme, perform intrusion detection based on a first type of the first message, and in response to receiving a second message based on a second communication scheme, to perform intrusion detection on the second message; and a second signal processing device including a first intrusion detection processor configured to, in response to receiving the first message based on the first communication scheme, perform intrusion detection based on a second type of the first message, wherein in response to receiving a first message based on the second communication scheme from an external source, the integrated intrusion detection processor in the signal processing device is configured to perform the intrusion detection based on the first type of the first message after inspecting a header and payload based on the second communication scheme.

Meanwhile, in response to receiving the first message based on the second communication scheme, the integrated intrusion detection processor in the signal processing device can be configured to transmit the first message, for which the intrusion detection has been completed, and a timing exception message related to the first message to the second signal processing device.

Meanwhile, the first intrusion detection processor in the second signal processing device can be configured to perform the intrusion detection based on the second type based on a format or timing of the received first message, and in response to receiving the timing exception message from the signal processing device, can be configured to determine that the timing of the first message is normal while performing the intrusion detection based on the second type.

Meanwhile, the second signal processing device can further comprise a second intrusion detection processor which, in response to receiving the second message based on the second communication scheme, can be configured to perform intrusion detection on the second message.

Meanwhile, the second signal processing device can be configured to receive a first message including an in-vehicle sensor signal based on the first communication scheme and perform intrusion detection on the first message, and to transmit the first message, for which the intrusion detection has been completed, based on the second communication scheme.

Meanwhile, the signal processing device can be configured to transmit the first message based on the second communication scheme, which is received from the second signal processing device, to an external server.

Meanwhile, the second signal processing device can be configured to perform syntax-based intrusion detection based on a format or timing of the first message, and the signal processing device can be configured to perform semantic-based intrusion detection based on semantics of the first message.

Meanwhile, the signal processing device can be configured to perform semantic-based intrusion detection based on a correlation between a plurality of first messages received from a plurality of second signal processing devices.

Meanwhile, the second signal processing device can be configured to detect whether intrusion is detected in the first message based on a message ID, data length, and signal range of the first message, or a generation period of the first message, and the signal processing device can be configured to detect whether intrusion is detected in the first message based on a message sequence, a range of increase or decrease in signal, a signal state, or a signal correlation in the first message.

Meanwhile, in response to a vehicle speed range in the first message exceeding an allowable value, the second signal processing device can be configured to detect the first message as a message corresponding to the intrusion detection based on the second type.

Meanwhile, in response to a range of increase or decrease in vehicle speed in the first message exceeding an allowable range of increase or decrease, the signal processing device can be configured to detect the first message as a message corresponding to the intrusion detection based on the firs type.

Meanwhile, the second signal processing device can further comprise: a first accelerator configured to accelerate processing of the first message; and a second accelerator configured to accelerate processing of the second message.

Meanwhile, upon detecting intrusion in the first message or the second message, the integrated intrusion detection processor or the first intrusion detection processor can be configured to drop the first message or the second message.

In accordance with another aspect of the present disclosure, the above and other objectives can be accomplished by providing a signal processing system of a vehicle and a vehicle including the same, the signal processing system comprising: a signal processing device comprising an integrated intrusion detection processor configured to, in response to receiving a first message based on a first communication scheme, perform intrusion detection based on a first type of the first message, and in response to receiving a second message based on a second communication scheme, to perform intrusion detection on the second message; and a second signal processing device comprising a first intrusion detection processor configured to, in response to receiving the first message based on the first communication scheme, perform intrusion detection based on a second type of the first message, wherein the second signal processing device is configured to receive a first message including an in-vehicle sensor signal based on the first communication scheme and perform intrusion detection on the first message, and to transmit the first message, for which the intrusion detection has been completed, based on the second communication scheme.

Meanwhile, the signal processing device can be configured to transmit the first message based on the second communication scheme, which is received from the second signal processing device, to an external server.

Meanwhile, the first intrusion detection processor in the second signal processing device can be configured to perform the intrusion detection based on the second type based on a format or timing of the received first message, and in response to receiving the timing exception message from the signal processing device, can be configured to determine that the timing of the first message is normal while performing the intrusion detection based on the second type.

Meanwhile, the second signal processing device can further comprise a second intrusion detection processor which, in response to receiving the second message based on the second communication scheme, can be configured to perform intrusion detection on the second message.

### EFFECTS OF THE DISCLOSURE

In a signal processing system of a vehicle and a vehicle including the same according to an embodiment of the present disclosure, the signal processing system includes: a signal processing device including an integrated intrusion detection processor configured to, in response to receiving a first message based on a first communication scheme, perform intrusion detection based on a first type of the first message, and in response to receiving a second message based on a second communication scheme, to perform intrusion detection on the second message; and a second signal processing device including a first intrusion detection processor configured to, in response to receiving the first message based on the first communication scheme, perform intrusion detection based on a second type of the first message, wherein in response to receiving a first message based on the second communication scheme from an external source, the integrated intrusion detection processor in the signal processing device is configured to perform the intrusion detection based on the first type of the first message after inspecting a header and payload based on the second communication scheme. Accordingly, it is possible to reduce false detection for the received messages.

Meanwhile, in response to receiving the first message based on the second communication scheme, the integrated intrusion detection processor in the signal processing device can be configured to transmit the first message, for which the intrusion detection has been completed, and a timing exception message related to the first message to the second signal processing device. Accordingly, it is possible to reduce false detection for the received messages.

Meanwhile, the first intrusion detection processor in the second signal processing device can be configured to perform the intrusion detection based on the second type based on a format or timing of the received first message, and in response to receiving the timing exception message from the signal processing device, can be configured to determine that the timing of the first message is normal while performing the intrusion detection based on the second type. Accordingly, it is possible to prevent an error in intrusion detection for the received first message based on the second communication scheme.

Meanwhile, the second signal processing device can further comprise a second intrusion detection processor which, in response to receiving the second message based on the second communication scheme, can be configured to perform intrusion detection on the second message. Accordingly, it is possible to perform intrusion detection on the received second message.

Meanwhile, the second signal processing device can be configured to receive a first message including an in-vehicle sensor signal based on the first communication scheme and perform intrusion detection on the first message, and to transmit the first message, for which the intrusion detection has been completed, based on the second communication scheme. Accordingly, it is possible to perform intrusion detection on the received first message.

Meanwhile, the signal processing device can be configured to transmit the first message based on the second communication scheme, which is received from the second signal processing device, to an external server. Accordingly, the first message, for which intrusion detection has been completed, can be stably transmitted to the outside.

Meanwhile, the second signal processing device can be configured to perform syntax-based intrusion detection based on a format or timing of the first message, and the signal processing device can be configured to perform semantic-based intrusion detection based on semantics of the first message. Accordingly, intrusion detection can be efficiently performed on the received messages. Particularly, the signal processing device and the second signal processing device can process the first message in a distributed manner, thereby efficiently performing the intrusion detection on the first message. In addition, load on the second signal processing device can be reduced.

Meanwhile, the signal processing device can be configured to perform semantic-based intrusion detection based on a correlation between a plurality of first messages received from a plurality of second signal processing devices. Accordingly, intrusion detection can be efficiently performed on the received first messages.

Meanwhile, the second signal processing device can be configured to detect whether intrusion is detected in the first message based on a message ID, data length, and signal range of the first message, or a generation period of the first message, and the signal processing device can be configured to detect whether intrusion is detected in the first message based on a message sequence, a range of increase or decrease in signal, a signal state, or a signal correlation in the first message. Accordingly, intrusion detection can be efficiently performed on the received first message.

Meanwhile, in response to a vehicle speed range in the first message exceeding an allowable value, the second signal processing device can be configured to detect the first message as a message corresponding to the intrusion detection based on the second type. Accordingly, intrusion detection can be efficiently performed on the received first message

Meanwhile, in response to a range of increase or decrease in vehicle speed in the first message exceeding an allowable range of increase or decrease, the signal processing device can be configured to detect the first message as a message corresponding to the intrusion detection based on the firs type. Accordingly, intrusion detection can be efficiently performed on the received first message.

Meanwhile, the second signal processing device can further comprise: a first accelerator configured to accelerate processing of the first message; and a second accelerator configured to accelerate processing of the second message. Accordingly, processing of the messages can be accelerated.

Meanwhile, upon detecting intrusion in the first message or the second message, the integrated intrusion detection processor or the first intrusion detection processor can be configured to drop the first message or the second message. Accordingly, the messages can be stably managed.

In a signal processing system of a vehicle and a vehicle including the same according to another embodiment of the present disclosure, the signal processing system includes: a signal processing device comprising an integrated intrusion detection processor configured to, in response to receiving a first message based on a first communication scheme, perform intrusion detection based on a first type of the first message, and in response to receiving a second message based on a second communication scheme, to perform intrusion detection on the second message; and a second signal processing device comprising a first intrusion detection processor configured to, in response to receiving the first message based on the first communication scheme, perform intrusion detection based on a second type of the first message, wherein the second signal processing device is configured to receive a first message including an in-vehicle sensor signal based on the first communication scheme and perform intrusion detection on the first message, and to transmit the first message, for which the intrusion detection has been completed, based on the second communication scheme. Accordingly, intrusion detection can be efficiently performed on the received messages. Particularly, intrusion detection can be efficiently performed on the received first message.

Meanwhile, the signal processing device can be configured to transmit the first message based on the second communication scheme, which is received from the second signal processing device, to an external server. Accordingly, the first message, for which the intrusion detection has been completed, can be stably transmitted to the outside.

Meanwhile, the first intrusion detection processor in the second signal processing device can be configured to perform the intrusion detection based on the second type based on a format or timing of the received first message, and in response to receiving the timing exception message from the signal processing device, can be configured to determine that the timing of the first message is normal while performing the intrusion detection based on the second type. Accordingly, it is possible to prevent an error in intrusion detection for the received first message based on the second communication scheme.

Meanwhile, the second signal processing device can further comprise a second intrusion detection processor which, in response to receiving the second message based on the second communication scheme, can be configured to perform intrusion detection on the second message. Accordingly, intrusion detection can be performed on the received second message.

### BRIEF DESCRIPTION OF THE DRAWINGS

FIG. 1 is a view showing an example of the exterior and interior of a vehicle;
FIGS. 2A to 2C are diagrams illustrating various architectures of a vehicle communication gateway according to an embodiment of the present disclosure;
FIG. 3 is an internal block diagram illustrating the signal processing device of FIG. 2A;
FIG. 4A is a diagram illustrating an example of an arrangement of a vehicle display apparatus in a vehicle according to an embodiment of the present disclosure;
FIG. 4B is a diagram illustrating another example of an arrangement of a vehicle display apparatus in a vehicle according to an embodiment of the present disclosure;
FIG. 5 is an internal block diagram illustrating the vehicle display apparatus of FIG. 4B;
FIG. 6 is an internal block diagram illustrating an example of a vehicle communication device;
FIG. 7 is an internal block diagram illustrating another example of a vehicle communication device;
FIG. 8 is an exemplary internal block diagram of a signal processing system for a vehicle associated with the present disclosure;
FIG. 9 is an exemplary internal block diagram of a signal processing system for a vehicle according to an embodiment of the present disclosure; and
FIGS. 10A to 15 are diagrams referred to in the description of FIG. 9.

### DETAILED DESCRIPTION

Hereinafter, the present disclosure will be described in detail with reference to the accompanying drawings.

With respect to constituent elements used in the following description, suffixes "module" and "unit" are given only in consideration of ease in preparation of the specification, and do not have or serve different meanings. Accordingly, the suffixes "module" and "unit" can be used interchangeably.

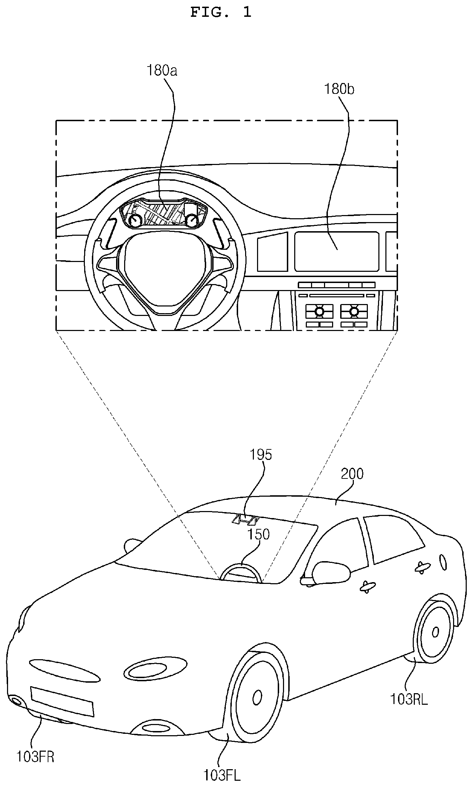

FIG. 1 is a view showing an example of the exterior and interior of a vehicle.

Referring to the figure, the vehicle 200 is moved by a plurality of wheels 103FR, 103FL, 103RL,... rotated by a power source and a steering wheel 150 configured to adjust an advancing direction of the vehicle 200.

Meanwhile, the vehicle 200 can be provided with a camera 195 configured to acquire an image of the front of the vehicle.

Meanwhile, the vehicle 200 can be further provided therein with a plurality of displays 180a and 180b configured to display images and information.

In FIG. 1, a cluster display 180a and an audio video navigation (AVN) display 180b are illustrated as the plurality of displays 180a and 180b. In addition, a head up display (HUD) can also be used.

Meanwhile, the audio video navigation (AVN) display 180b can also be called a center information display.

Meanwhile, the vehicle 200 described in this specification can be a concept including all of a vehicle having an engine as a power source, a hybrid vehicle having an engine and an electric motor as a power source, and an electric vehicle having an electric motor as a power source.

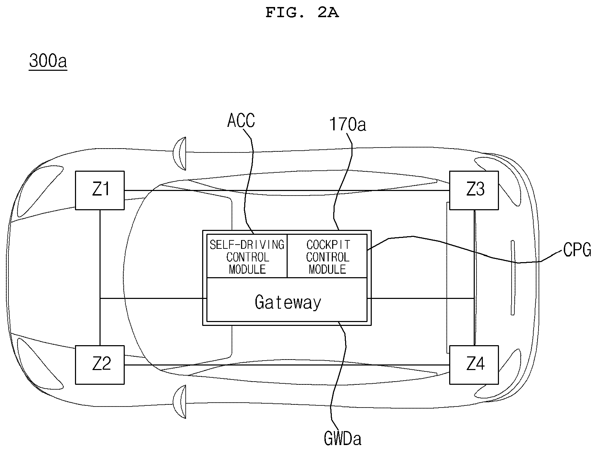

FIGS. 2A to 2C are diagrams illustrating various architectures of a vehicle communication gateway according to an embodiment of the present disclosure.

First, FIG. 2A is a diagram illustrating a first architecture of a vehicle communication gateway according to an embodiment of the present disclosure.

Referring to the drawing, the first architecture 300a can correspond to a zone-based architecture.

Accordingly, in-vehicle sensor devices and processors can be mounted in each of a plurality of zones Z1 to Z4, and a signal processing device 170a including a vehicle communication gateway GWDa can be disposed at the center of the plurality of zones Z1 to Z4.

Meanwhile, the signal processing device 170a can further comprise an autonomous driving control module ACC, a cockpit control module CPG, etc., in addition to the vehicle communication gateway GWDa.

The vehicle communication gateway GWDa in the signal processing device 170a can be a High Performance Computing (HPC) gateway.

That is, as an integrated HPC gateway, the signal processing device 170a of FIG. 2A can exchange data with an external communication module (not shown) or processors (not shown) in the plurality of zones Z1 to Z4.

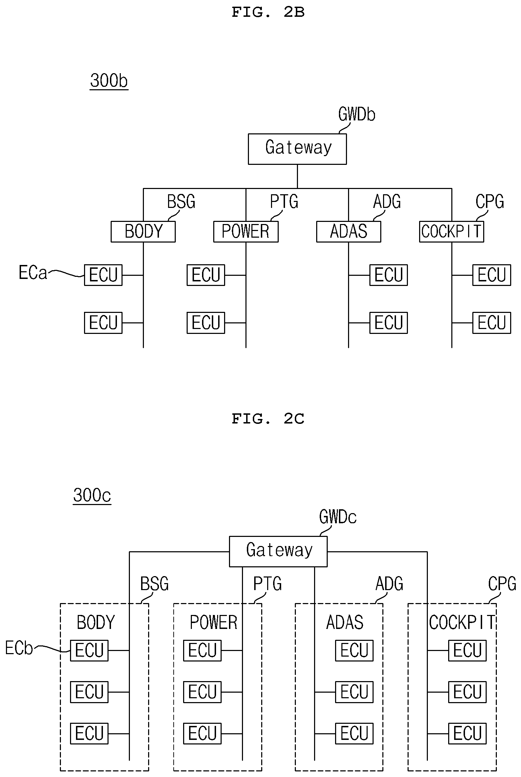

FIG. 2B is a diagram illustrating a second architecture of a vehicle communication gateway according to an embodiment of the present disclosure.

Referring to the drawing, a second architecture 300b can correspond to a domain integrated architecture.

Accordingly, a body chassis control module (BSG), a power control module (PTG), an ADAS control module (ADG), and a cockpit control module (CPG) are connected in parallel to a gateway GWDb, and a plurality of processors ECU can be electrically connected to the respective modules BSG, PTG, ADG, and CPG.

Meanwhile, the respective processors ECU can be connected to the gateway GWDb while being integrated therein.

Meanwhile, the signal processing device 170 including the gateway GWDb of FIG. 2B can function as a domain integrated signal processing device.

FIG. 2C is a diagram illustrating a third architecture of a vehicle communication gateway according to an embodiment of the present disclosure.

Referring to the drawing, a third architecture 300c can correspond to a distributed architecture.

Accordingly, the body chassis control module (BSG), the power control module (PTG), the ADAS control module (ADG), and the cockpit control module (CPG) are connected in parallel to a gateway GWDc, and particularly a plurality of processors ECU in the respective control modules can be electrically connected in parallel to the gateway GWDc.

In comparison with FIG. 2B, the third architecture has a difference in that the respective processors ECU are connected directly to the gateway GWDc without being connected to another module.

Meanwhile, the signal processing device 170 including the gateway GWDc of FIG. 2C functions as a distributed signal processing device.

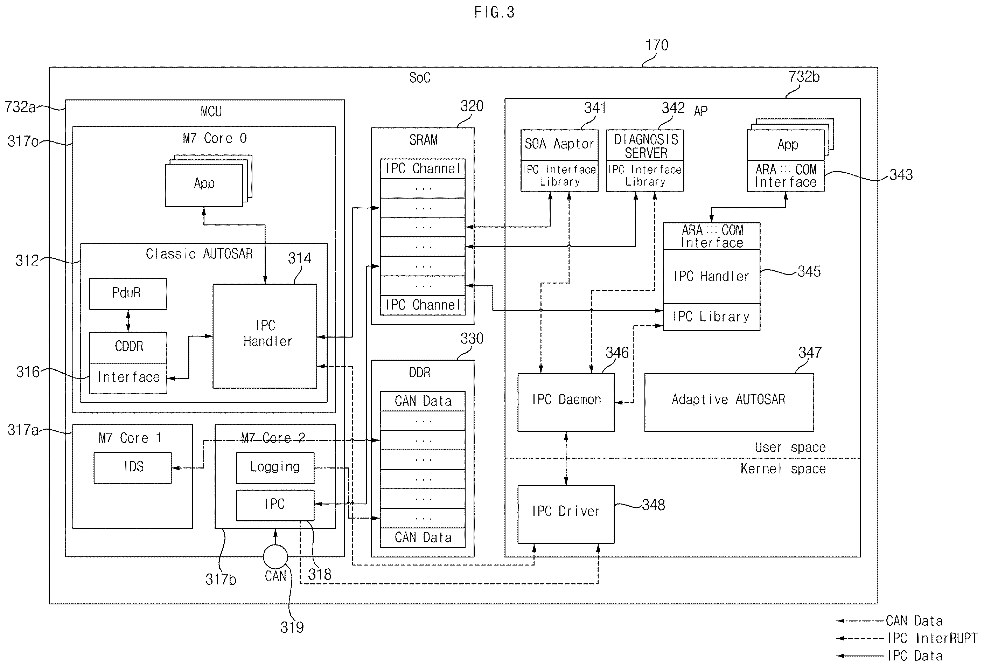

FIG. 3 is an internal block diagram illustrating the signal processing device of FIG. 2A.

Referring to the drawing, the signal processing device 170 according to an embodiment of the present disclosure includes: a first processor 732a, which based on a first communication scheme, is configured to receive a first message including a sensor signal in a vehicle and to perform signal processing on the received first message; and a second processor 732b, which based a second communication scheme, is configured to receive a second message including a communication message received from an external source and to perform signal processing on the received second message.

In this case, the second communication scheme can have a faster communication speed or a wider bandwidth than the first communication scheme.

For example, the second communication scheme can be Ethernet communication, and the first communication scheme can be CAN communication. Accordingly, the first message can be a CAN message, and the second message can be an Ethernet message.

Meanwhile, the signal processing device 170 according to an embodiment of the present disclosure further includes: a first memory 320 having an IPC channel; and a second memory 330 storing sensor data including vehicle speed data.

For example, the first memory 320 can be a Static RAM (SRAM), and the second memory 330 can be a DDR memory. Particularly, the second memory 330 can be a Double data rate synchronous dynamic random access memory (DDR SDRAM).

Meanwhile, the signal processing device 170 according to an embodiment of the present disclosure includes a shared memory 508 which operates to transmit the first message or the second message between the first processor 732a and the second processor 732b.

As described above, by performing inter-processor communication using the shared memory 508 during the communication between the first processor 732a and the second processor 732b, latency can be reduced and high-speed data transmission can be performed during inter-processor communication.

Meanwhile, it is desired that the shared memory 508 is provided in the first memory 320. Accordingly, latency can be reduced and high-speed data transmission can be performed during inter-processor communication.

Meanwhile, the first processor 732a can include a plurality of processor cores 317o, 317a, and 317b disposed therein.

Meanwhile, the first processor 732a can further comprise an interface 319 for receiving the CAN message from external vehicle sensors.

For example, a first processor core 317o included in the first processor 732a can execute a plurality of applications or can execute a first AUTomotive Open System Architecture (AUTOSAR) 312.

Particularly, by executing a second AUTOSAR 312, the first processor core 317o can execute an inter-processor communication (IPC) handler 314.

Meanwhile, the IPC handler 314 can exchange data with the first memory 320 or can exchange IPC data with an application running on the core 317o.

Meanwhile, the IPC handler 314 can exchange an interrupt signal with an IPC driver 348 included in the second processor 732b.

Meanwhile, a second processor core 317a included in the first processor 732a can execute IDS and can receive CAN data from the second memory 330.

Meanwhile, a third processor core 317b included in the first processor 732a can execute Logging, and can store the CAN data, received through the interface 319, in the second memory 330.

Meanwhile, the third processor core 317b included in the first processor 732a can execute an IPC module 318 to exchange IPC data with the first memory 320.

Meanwhile, the third processor core 317b included in the first processor 732a can transmit an interrupt signal to the IPC driver 348 in the second processor 732b.

The first memory 320 can exchange the IPC data with the IPC handler 314 or the IPC module 318.

Meanwhile, the second processor 732b can execute an application 343, the IPC handler 345, an IPC daemon 346, the IPC driver 348, and the like.

Meanwhile, the second processor 732b can further execute a service oriented architecture (SOA) adapter 341, a diagnosis server 342, and the second AUTOSAR 347.

The second AUTOSAR 347 can be an adaptive AUTOSAR, and the first AUTOSAR 312 can be a classic AUTOSAR.

The IPC daemon 346 can exchange an interrupt signal with the SOA adapter 341, the diagnosis server 342, the IPC handler 345, the IPC driver 348, and the like.

Meanwhile, the first memory 320 can exchange IPC data with the SOA adapter 341, the diagnosis server 342, the IPC handler 345, and the like.

Meanwhile, the IPC data described with reference to FIG. 3 can be the CAN message or Ethernet message.

Meanwhile, the IPC handler 345 can function as a service provider providing data such as diagnosis, firmware, upgrade, system information, etc., based on the second AUTOSAR 347.

Meanwhile, although not illustrated in FIG. 3, the first processor 732a implements a message router (not shown), and the message router can convert a frame of the first message, such as the CAN message, into a frame format of the second message, such as the Ethernet message, and can transmit the converted message to the second processor 732b.

Meanwhile, although not illustrated in FIG. 3, the first processor 732a can further implement a CAN driver (not shown) and a CAN interface (not shown).

For example, the CAN interface (not shown) can be implemented by a total of 16 channels, with eight channels of each of a fourth processor core (not shown) and a fifth processor core (not shown) in the first processor 732a.

In this case, a first CAN interface (not shown) implemented on the fourth processor core (not shown) can correspond to a first queue (PTb) during inter-processor communication, and a second CAN interface (not shown) implemented on the fifth processor core (not shown) can correspond to a second queue (PTb), having a higher priority than the first queue (PTb), during inter-processor communication.

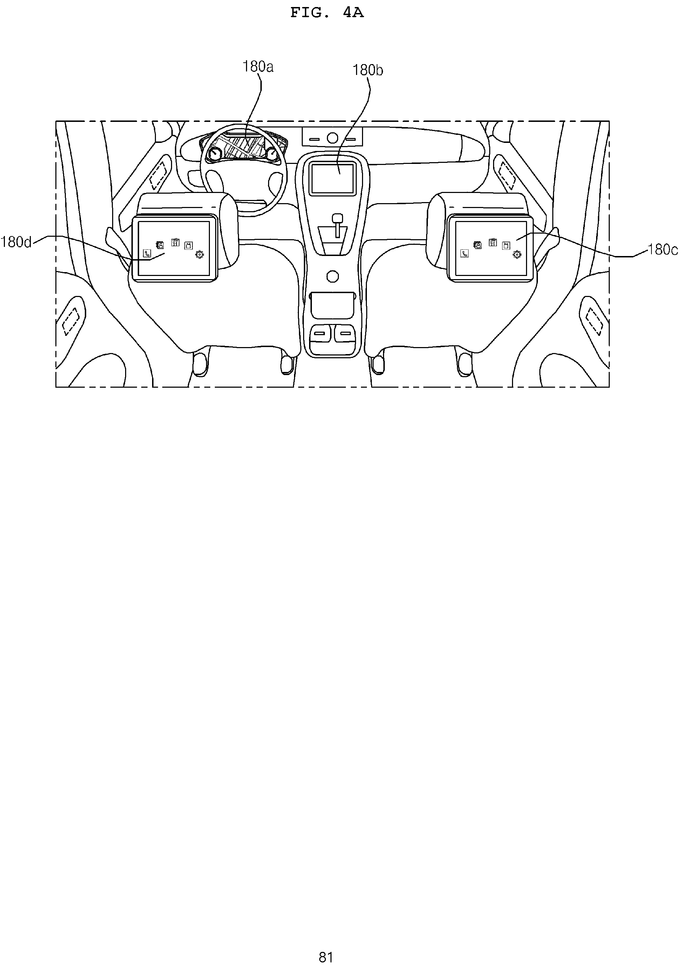

FIG. 4A is a diagram illustrating an example of an arrangement of a vehicle display apparatus in a vehicle according to an embodiment of the present disclosure.

Referring to the figure, a cluster display 180a, an audio video navigation (AVN) display 180b, rear seat entertainment displays 180c and 180d, and a rear-view mirror display (not shown) can be mounted in the vehicle.

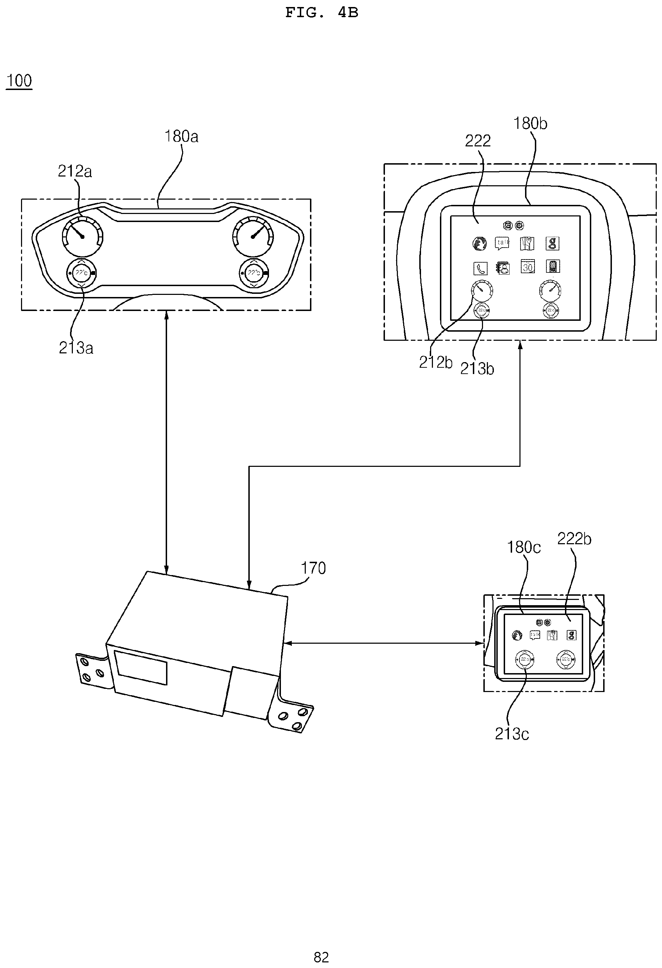

FIG. 4B is a diagram illustrating another example of an arrangement of a vehicle display apparatus in a vehicle according to an embodiment of the present disclosure.

The vehicle display apparatus 100 according to the embodiment of the present disclosure can include a plurality of displays 180a and 180b and a signal processing device 170 configured to perform signal processing in order to display images and information on the plurality of displays 180a and 180b.

The first display 180a, which is one of the plurality of displays 180a and 180b, can be a cluster display 180a configured to display a driving state and operation information, and the second display 180b can be an audio video navigation (AVN) display 180b configured to display vehicle driving information, a navigation map, various kinds of entertainment information, or an image.

The signal processing device 170 can have a processor 175 provided therein, and first to third virtual machines (not shown) can be executed by a hypervisor 505 in the processor 175.

The second virtual machine (not shown) can be operated for the first display 180a, and the third virtual machine (not shown) can be operated for the second display 180b.

Meanwhile, the first virtual machine (not shown) in the processor 175 can be configured to set a shared memory 508 based on the hypervisor 505 for transmission of the same data to the second virtual machine (not shown) and the third virtual machine (not shown). Consequently, the first display 180a and the second display 180b in the vehicle can display the same information or the same images in a synchronized state.

Meanwhile, the first virtual machine (not shown) in the processor 175 shares at least some of data with the second virtual machine (not shown) and the third virtual machine (not shown) for divided processing of data. Consequently, the plurality of virtual machines for the plurality of displays in the vehicle can divide and process data.

Meanwhile, the first virtual machine (not shown) in the processor 175 can receive and process wheel speed sensor data of the vehicle, and can transmit the processed wheel speed sensor data to at least one of the second virtual machine (not shown) or the third virtual machine (not shown). Consequently, at least one virtual machine can share the wheel speed sensor data of the vehicle.

Meanwhile, the vehicle display apparatus 100 according to the embodiment of the present disclosure can further comprise a rear seat entertainment (RSE) display 180c configured to display driving state information, simple navigation information, various kinds of entertainment information, or an image.

The signal processing device 170 can further execute a fourth virtual machine (not shown), in addition to the first to third virtual machines (not shown), on the hypervisor 505 in the processor 175 to control the RSE display 180c.

Consequently, it is possible to control various displays 180a to 180c using a single signal processing device 170.

Meanwhile, some of the plurality of displays 180a to 180c can be operated based on a Linux Operating System (OS), and others can be operated based on a Web Operating System (OS).

The signal processing device 170 according to the embodiment of the present disclosure can be configured to display the same information or the same images in a synchronized state on the displays 180a to 180c to be operated under various operating systems.

Meanwhile, FIG. 4B illustrates that a vehicle speed indicator 212a and an in-vehicle temperature indicator 213a are displayed on the first display 180a, a home screen 222 including a plurality of applications, a vehicle speed indicator 212b, and an in-vehicle temperature indicator 213b is displayed on the second display 180b, and a second home screen 222b including a plurality of applications and an in-vehicle temperature indicator 213c is displayed on the third display 180c.

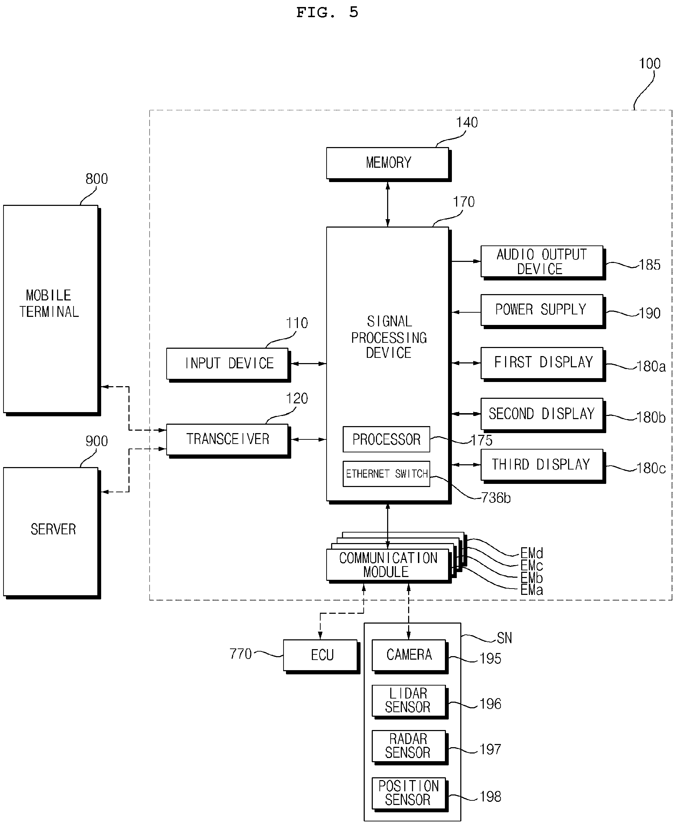

FIG. 5 is an internal block diagram illustrating the vehicle display apparatus of FIG. 4B according to the embodiment of the present disclosure.

Referring to the figure, the vehicle display apparatus 100 according to the embodiment of the present disclosure can include an input device 110, a transceiver 120 for communication with an external device, a plurality of communication modules EMa to EMd for internal communication, a memory 140, a signal processing device 170, a plurality of displays 180a to 180c, an audio output device 185, and a power supply 190.

The plurality of communication modules EMa to EMd can be disposed in a plurality of zones Z1 to Z4, respectively, in FIG. 2A.

Meanwhile, the signal processing device 170 can be provided therein with an Ethernet switch 736b for data communication with the respective communication modules EM1 to EM4.

The respective communication modules EM1 to EM4 can perform data communication with a plurality of sensor devices SN or an ECU 770.

Meanwhile, each of the plurality of sensor devices SN can include a camera 195, a lidar sensor 196, a radar sensor 197, or a position sensor 198.

The input device 110 can include a physical button or pad for button input or touch input.

Meanwhile, the input device 110 can include a microphone (not shown) for user voice input.

The transceiver 120 can wirelessly exchange data with a mobile terminal 800 or a server 900.

In particular, the transceiver 120 can wirelessly exchange data with a mobile terminal of a vehicle driver. Any of various data communication schemes, such as Bluetooth, Wi-Fi, WIFI Direct, and APIX, can be used as a wireless data communication scheme.

The transceiver 120 can receive weather information and road traffic situation information, such as transport protocol expert group (TPEG) information, from the mobile terminal 800 or the server 900. To this end, the transceiver 120 can include a mobile communication module (not shown).

The plurality of communication modules EM1 to EM4 can receive sensor information from an electronic control unit (ECU) 770 or a sensor device SN, and can transmit the received information to the signal processing device 170.

Here, the sensor information can include at least one of vehicle direction information, vehicle location information (global positioning system (GPS) information), vehicle angle information, vehicle velocity information, vehicle acceleration information, vehicle inclination information, vehicle forward/backward movement information, battery information, fuel information, tire information, vehicle lamp information, in-vehicle temperature information, or in-vehicle humidity information.

The sensor information can be acquired from a heading sensor, a yaw sensor, a gyro sensor, a position sensor, a vehicle forward/backward movement sensor, a wheel sensor, a vehicle velocity sensor, a car body inclination sensor, a battery sensor, a fuel sensor, a tire sensor, a steering-wheel-rotation-based steering sensor, an in-vehicle temperature sensor, or an in-vehicle humidity sensor.

Meanwhile, the position module can include a GPS module configured to receive GPS information or a position sensor 198.

Meanwhile, at least one of the plurality of communication modules EM1 to EM4 can transmit position information data sensed by the GPS module or the position sensor 198 to the signal processing device 170.

Meanwhile, at least one of the plurality of communication modules EM1 to EM4 can receive front-of-vehicle image data, side-of-vehicle image data, rear-of-vehicle image data, and obstacle-around-vehicle distance information from the camera 195, the lidar sensor 196, or the radar sensor 197, and can transmit the received information to the signal processing device 170.

The memory 140 can store various data necessary for overall operation of the vehicle display apparatus 100, such as programs for processing or control of the signal processing device 170.

For example, the memory 140 can store data about the hypervisor and first to third virtual machines executed by the hypervisor in the processor 175.

The audio output device 185 can convert an electrical signal from the signal processing device 170 into an audio signal, and can output the audio signal. To this end, the audio output device 185 can include a speaker.

The power supply 190 can supply power necessary to operate components under control of the signal processing device 170. In particular, the power supply 190 can receive power from a battery in the vehicle.

The signal processing device 170 can control overall operation of each device in the vehicle display apparatus 100.

For example, the signal processing device 170 can include a processor 175 configured to perform signal processing for the vehicle displays 180a and 180b.

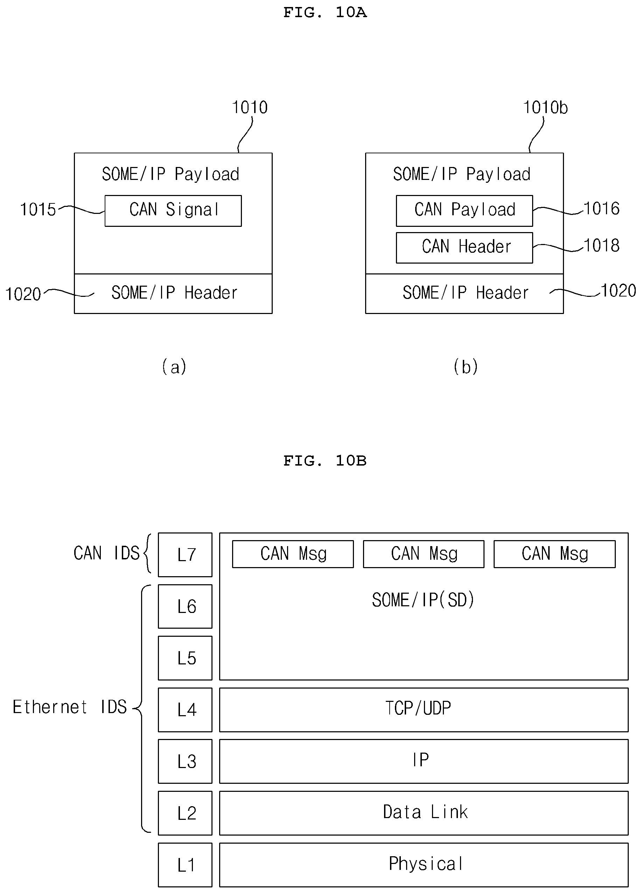

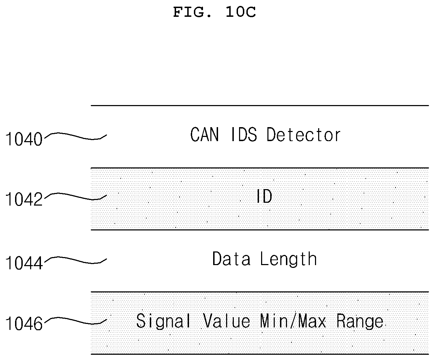

The processor 175 can execute the first to third virtual machines (not shown) on the hypervisor 505 (see FIG. 10) in the processor 175.

Among the first to third virtual machines (not shown) (see FIG. 10), the first virtual machine (not shown) can be called a server virtual machine, and the second and third virtual machines (not shown) and (not shown) can be called guest virtual machines.

For example, the first virtual machine (not shown) in the processor 175 can receive sensor data from the plurality of sensor devices, such as vehicle sensor data, position information data, camera image data, audio data, or touch input data, and can process and output the received sensor data.

As described above, the first virtual machine (not shown) can process most of the data, whereby 1:N data sharing can be achieved.

In another example, the first virtual machine (not shown) can directly receive and process CAN data, Ethernet data, audio data, radio data, USB data, and wireless communication data for the second and third virtual machines (not shown).

Further, the first virtual machine (not shown) can transmit the processed data to the second and third virtual machines 530 and 540.

Accordingly, only the first virtual machine (not shown), among the first to third virtual machines (not shown), can receive sensor data from the plurality of sensor devices, communication data, or external input data, and can perform signal processing, whereby load in signal processing by the other virtual machines can be reduced and 1:N data communication can be achieved, and therefore synchronization at the time of data sharing can be achieved.

Meanwhile, the first virtual machine (not shown) can be configured to write data in the shared memory 508, whereby the second virtual machine (not shown) and the third virtual machine (not shown) share the same data.

For example, the first virtual machine (not shown) can be configured to write vehicle sensor data, the position information data, the camera image data, or the touch input data in the shared memory 508, whereby the second virtual machine (not shown) and the third virtual machine (not shown) share the same data. Consequently, 1:N data sharing can be achieved.

Eventually, the first virtual machine (not shown) can process most of the data, whereby 1:N data sharing can be achieved.

Meanwhile, the first virtual machine (not shown) in the processor 175 can be configured to set the shared memory 508 based on the hypervisor 505 in order to transmit the same data to the second virtual machine (not shown) and the third virtual machine (not shown).

Meanwhile, the signal processing device 170 can process various signals, such as an audio signal, an image signal, and a data signal. To this end, the signal processing device 170 can be implemented in the form of a system on chip (SOC).

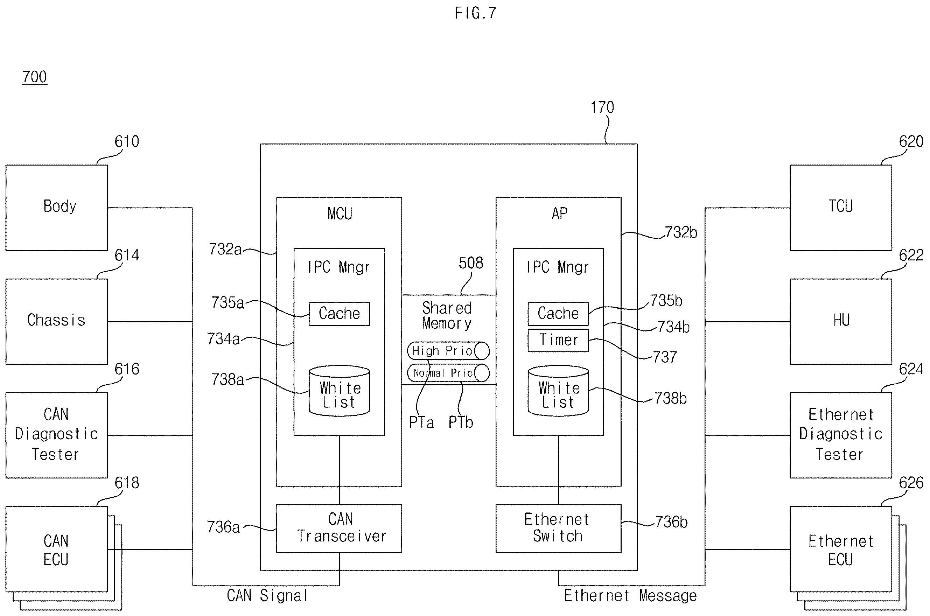

Meanwhile, the signal processing device 170 included in the display apparatus 100 of FIG. 5 can be the same as the signal processing device 170 of a vehicle communication device 700 of FIG. 7 and the like.

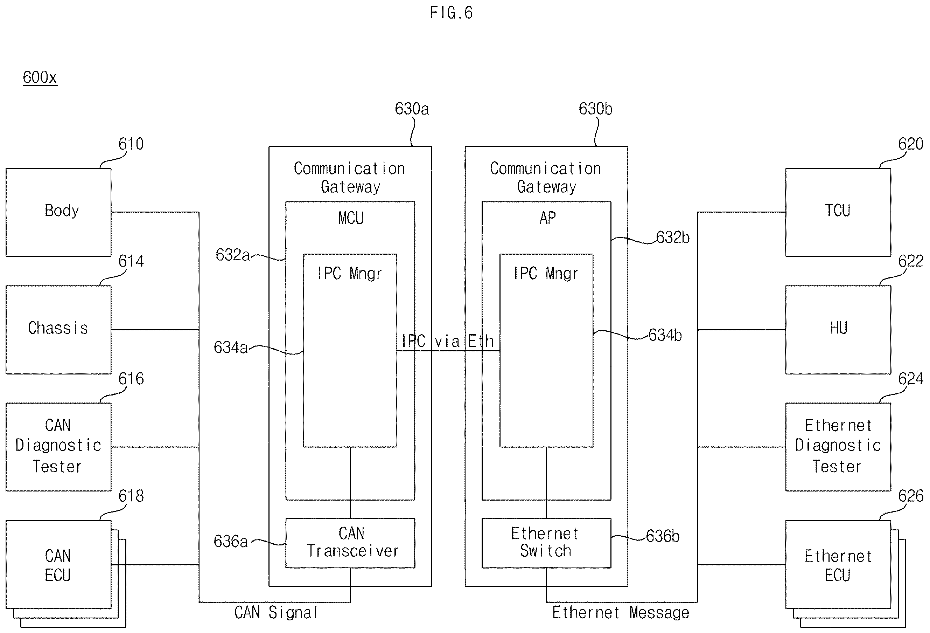

FIG. 6 is an internal block diagram illustrating an example of a vehicle communication device.

Referring to the drawing, a vehicle communication device 600x associated with the present disclosure can include a first communication gateway 630a and a second communication gateway 630b.

The first communication gateway 630a can include a body module 610, a chassis module 614, a CAN diagnostic tester 616, a CAN transceiver 636a for exchanging a CAN signal by CAN communication with at least one CAN ECU 618 and the like, and a first processor 632a for performing signal processing on the CAN signal received from the CAN transceiver 636a.

Meanwhile, the first processor 632a can include an IPC manager 634a for inter-processor communication with a second processor 632b in the second communication gateway 630b.

The second communication gateway 630b can include a telematics control module 620, a head module 622, an Ethernet diagnostic tester 624, an Ethernet switch 636b for exchanging an Ethernet message by Ethernet communication with at least one Ethernet ECU 626, and a second processor 632b for performing signal processing on the Ethernet message received from the Ethernet switch 636b.

Meanwhile, the second processor 632b can include an IPC manager 634b for inter-processor communication with the first processor 632a in the first communication gateway 630a.

Meanwhile, the IPC manager 634a in the first processor 632a and the IPC manager 643b in the second processor 632b can perform inter-processor communication based on the Ethernet communication.

While the inter-processor communication is suitable for high-speed transmission of large data using a high bandwidth based on Ethernet, the communication method has a drawback in that latency occurs in communication between a protocol stack and a Physical Layer (PHY).

Accordingly, the present disclosure provides a method of reducing latency and performing high-speed data transmission during inter-processor communication, which will be described below with reference to FIG. 7 and the following figures.

FIG. 7 is an internal block diagram illustrating another example of a vehicle communication device.

Referring to the drawing, the vehicle communication device 700 according to an embodiment can include: a first processor 732a which, based on a first communication scheme with a first communication gateway 730a and a second communication gateway 730b, is configured to receive a first message including an in-vehicle sensor signal and to perform signal processing on the received first message; a second processor 732b which, based on a second communication scheme, is configured to receive a second message including a communication message received from an external source and to perform signal processing of the received second message; and a shared memory 508 which operates to transmit the first message or the second message between the first processor 732a and the second processor 732b.

In comparison with the communication device 600x of FIG. 6, by using the shared memory 508 for inter-processor communication (IPC) between the first processor 732a and the second processor 732b, it is possible to reduce latency and to perform high-speed data transmission during the inter-processor communication.

In addition, in comparison with the communication device 600x of FIG. 6, by providing the first processor 732a, the second processor 732b, and the shared memory 508 in one signal processing device 170 implemented as a single chip, it is possible to reduce latency and to perform high-speed data transmission during the inter-processor communication.

Meanwhile, it is preferred that the second communication scheme has a faster communication speed or a wider bandwidth than the first communication scheme.

For example, the second communication scheme can be Ethernet communication, and the first communication scheme can be CAN communication. Accordingly, the first message can be a CAN message, and the second message can be an Ethernet message.

Meanwhile, the signal processing device 170 and the vehicle communication device 700 including the same according to an embodiment of the present disclosure can further comprise: a transceiver 736a which, based on the first communication scheme, is configured to receive a first message including an in-vehicle sensor signal and to transmit the first message to the first processor 732a; and the switch 736b which, based on the second communication scheme, is configured to receive a second message including a communication message received from an external source and to transmit the second message to the second processor 732b, such that the first and second messages can be transmitted stably to the first processor 732a and the second processor 732b.

The first processor 732a or the transceiver 736a can exchange a CAN signal by CAN communication with the body module 610, the chassis module 614, the CAN diagnostic tester 616, at least one CAN ECU 618, and the like.

Meanwhile, the first processor 732a can include a first manager 734a for inter-processor communication (IPC) with the second processor 732b. The first manager 734a can be referred to as an IPC manager.

Meanwhile, the first manager 734a can include a first cache 735a.

Meanwhile, the second processor 732b or the switch 736b can exchange an Ethernet message by Ethernet communication with the telematics control module 620, the head module 622, the Ethernet diagnostic tester 624, at least one Ethernet ECU 626, and the like. The switch 736b can be referred to as an Ethernet switch.

Meanwhile, the second processor 732b can include a second manager 734b for inter-processor communication (IPC) with the first processor 732a. The second manager 734a can be referred to as an IPC manager.

Meanwhile, the second manager 734b can include the second manager 734b including a second cache 735b and a timer 737.

Meanwhile, the second processor 723b can receive a request for periodic subscription to the first message from the Ethernet processor or the Ethernet ECU 626.

Accordingly, the second processor 732b can send the request for periodic subscription to the first message to the first processor 732a.

Particularly, the second processor 732b can transmit the subscription request through the inter-processor communication (IPC). Accordingly, the inter-processor communication can be performed.

Meanwhile, the first processor 732a can periodically receive CAN data from the at least one CAN ECU 618 and the like.

For example, the first processor 732a periodically receives the first message, predefined in a CAN database (DB), from the at least one CAN ECU 618 and the like.

For example, the periodic first message, which is sensor information, can include vehicle speed information, position information, or the like.

In another example, the periodic first message can include at least one of vehicle direction information, vehicle location information (GPS information), vehicle angle information, vehicle acceleration information, vehicle tilt information, forward/backward movement information, battery information, fuel information, tire information, vehicle lamp information, in-vehicle temperature information, or in-vehicle humidity information.

Meanwhile, the first processor 732a can select a first message, for which the subscription is requested, among the periodically received CAN data or first messages, and can transmit the first message, for which the subscription is requested, to the second processor 732b.

Meanwhile, the first processor 732a can separately process a first message, for which the subscription is not requested, among the periodically received CAN data or first messages, according to an internal operation without transmitting the message to the second processor 732b.

Specifically, in response to receiving the first message for which the subscription is requested, the first processor 732a can store the first message in the first cache 735a or can manage the first message. In response to receiving the first message, the first processor 732a can compare the first message with a value stored in the first cache 735a, and if a difference therebetween is greater than or equal to a predetermined value, the first processor 732a can transmit the first message to the second processor 732b through the inter-processor communication.

Meanwhile, in response to receiving the first message for which the subscription is requested, the first processor 732a can store the first message in the first cache 735a or can manage the first message. In response to receiving the first message, the first processor 732a can compare the first message with a value stored in the first cache 735a, and if a difference therebetween is greater than or equal to a predetermined value, the first processor 732a can transmit the first message to the second processor 732b through the inter-processor communication using the shared memory 508.

For example, in response to receiving the first message, the first processor 732a can compare the message with a value stored in the first cache 735a, and if the two are not the same, the first processor 732a can transmit the first message to the second processor 732b through the inter-processor communication using the shared memory 508.

In another example, in response to receiving the first message, the first processor 732a can compare the message with the value stored in the first cache 735a, and if the two are the same, the first processor 732a can not transmit the first message to the second processor 732b.

Accordingly, by minimizing cache occupancy or buffer occupancy of the same data, it is possible to reduce latency and to perform high-speed data transmission during inter-processor communication.

Meanwhile, upon first receiving the first message, the second processor 732b can store the first message in the second cache 735b, and upon subsequently receiving the first message, the second processor 732b can update the second cache 735b. Accordingly, it is possible to reduce latency and to perform high-speed data transmission during inter-processor communication.

Meanwhile, in response to receiving the first message, the second processor 732b can generate a thread of the timer 737, and each time the thread terminates, the second processor 732b can send a value in the second cache 735b to the Ethernet processor or the Ethernet ECU 626. Accordingly, it is possible to reduce latency and to perform high-speed data transmission during inter-processor communication.

Meanwhile, during a period in which the inter-processor communication is not performed such that the first message is not received, the second processor 732b can send a value in the second cache 735b to the Ethernet processor or the Ethernet ECU 626.

That is, if a value of the subscribed first message is constant during the period, the cache value stored in the second processor 732b can be sent to the Ethernet processor 626 without the inter-processor communication.

Accordingly, it is possible to minimize the usage of the IPC buffer in the shared memory 508 which operates in FIFO mode. In addition, by maintaining the usage of the IPC buffer to a minimum, data including the first message, the second message, or the like can be transmitted rapidly through the inter-processor communication.

Meanwhile, during a period in which the inter-processor communication is performed such that the first message is received, the second processor 732b can send a value in the updated second cache 735b to the Ethernet processor or the Ethernet ECU 626. Accordingly, it is possible to reduce latency and to perform high-speed data transmission during inter-processor communication.

Meanwhile, during the inter-processor communication, the shared memory 508 can transmit data between the first processor 732a and the second processor 732b through a first queue PTb and a second queue PTa having a higher priority than the first queue PTb.

Particularly, even when the number of events for the inter-processor communication increases, the shared memory 508 can transmit only the data, corresponding to events allocated for the second queue PTa, through the second queue PTa. Accordingly, real-time transmission of a high priority event can be ensured during the inter-processor communication.

For example, the first PTb can be a normal priority queue, and the second queue PTa can be a high priority queue.

Specifically, the shared memory 508 can transmit most of the data through the first queue PTb during the inter-processor communication.

However, the shared memory 508 can transmit only time sensitive-critical data without delay through the second queue PTa which is a higher priority queue than the first queue PTb.

For example, the time sensitive-critical data can be speed data, position information data, or the like.

That is, the shared memory 508 can transmit the speed data or position information data between the first processor 732a or the second processor 732b through the second queue PTa. Accordingly, real-time transmission of the speed data or the position information data having a high priority can be ensured during the inter-processor communication.

Meanwhile, the first processor 732a or the second processor 732b can manage a list of applications capable of using the second queue PTa.

For example, the second processor 732b can include an application for displaying speed information, as an application capable of using the second queue PTa, in a second list 738b and can manage the list.

Meanwhile, for real-time transmission through the second queue PTa, a minimum operation is preferred so that there can be no redundant scenarios or applications.

As described above, by transmitting the time sensitive-critical data in real time using the second queue PTa, real-time transmission of a high priority event can be ensured during the inter-processor communication.

Meanwhile, during the inter-processor communication, the shared memory 508 can reduce latency and can perform high-speed data transmission by assigning at least two queues.

In the drawing, an example is illustrated in which the first manager 734a in the first processor 732a manages a first list 738a which is a whitelist, and the second manager 734b in the second processor 732b manages a second list 738b which is a whitelist, thereby ensuring the real-time transmission of a high-priority event during the inter-processor communication.

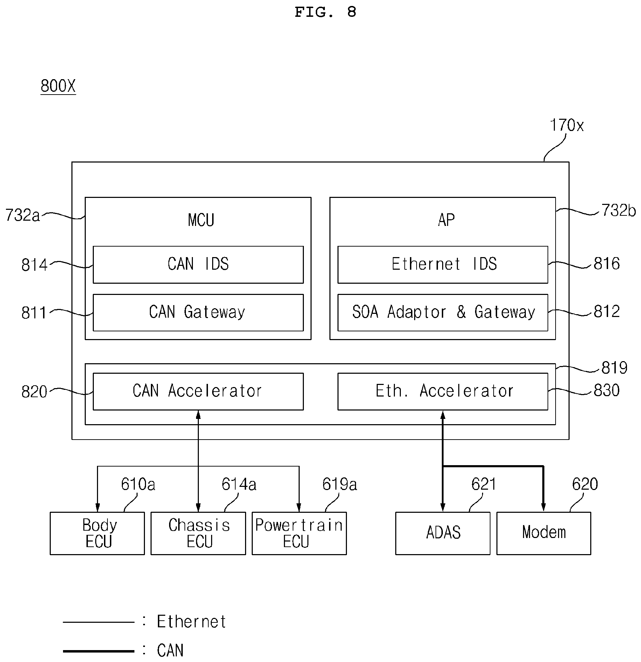

FIG. 8 is an exemplary internal block diagram of a signal processing system for a vehicle associated with the present disclosure.

Referring to FIG. 8, a signal processing system 800x for a vehicle associated with the present disclosure includes a signal processing device 170x including: a first processor 732a configured to receive a first message based on a first communication scheme, such as CAN communication, and to perform signal processing on the received first message; and a second processor 732b configured to receive a second message based on a second communication scheme, such as Ethernet communication, and to perform signal processing on the received second message.

Meanwhile, the signal processing device 170x of FIG. 8 further includes an accelerator 819 including: a first accelerator 820 configured to accelerate processing of the first message; and a second accelerator 830 configured to accelerate processing of the second message.

Meanwhile, the first processor 732a includes a CAN intrusion detection system (IDS) 814 configured to perform intrusion detection on the first message, and a CAN Gateway 811 configured to perform routing for transmitting the first message.

Meanwhile, the second processor 732b includes an Ethernet intrusion detection system (IDS) 816 configured to perform intrusion detection on the second message, and a Service-oriented architecture (SOA) Adaptor & Gateway 812 configured to operate for transmitting the second message.

The signal processing device 170x of FIG. 8 can exchange CAN signals by CAN communication with a body ECU 610a, a chassis ECU 614a, a powertrain ECU 619a, and the like in the vehicle.

Meanwhile, the signal processing device 170x of FIG. 8 can receive Ethernet data from an ADAS 621 or a communication module 620 in a vehicle or can transmit the Ethernet data to the communication module 620.

The signal processing device 170x of the signal processing system 800X for a vehicle of FIG. 8 has a drawback in that the CAN IDS 814 performs intrusion detection on the CAN message and the Ethernet IDS 816 performs intrusion detection on the Ethernet message, but intrusion detection on the CAN message transmitted via Ethernet communication, such as an SOA service, can not be properly performed.

For example, in the case in which a control message transmitted via Ethernet communication, such as the SOA service, is transmitted as the CAN message to the body ECU 610a, the chassis ECU 614a, or the powertrain ECU 619a, etc., the CAN IDS 814 determines the message as anomalous traffic, and thus can falsely detect the message as an attack message.

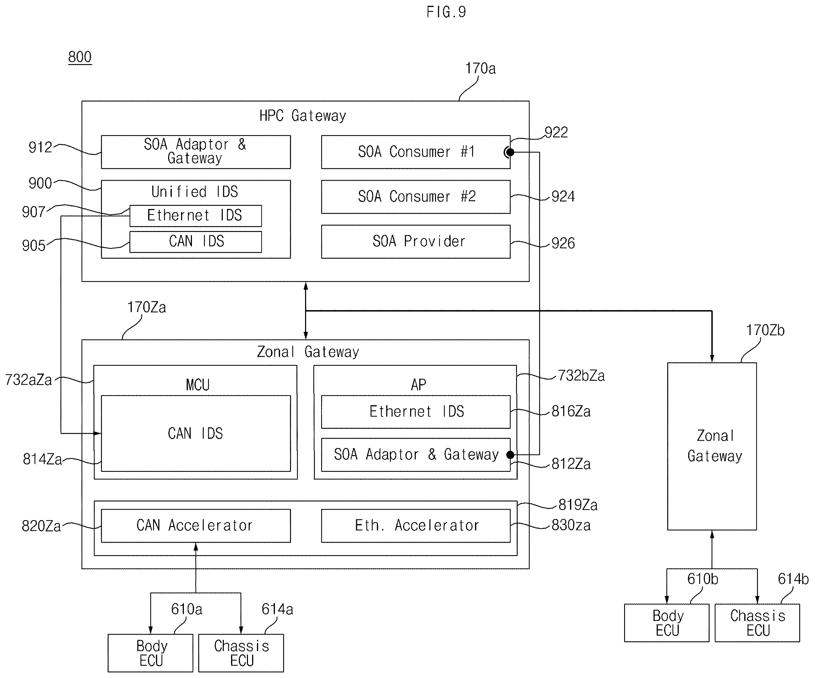

Accordingly, in order to solve the above problem, the present disclosure proposes an integrated intrusion detection processor 900 (FIG. 9) for integrated execution of the CAN IDS and the Ethernet IDS, which will be described below with reference to FIG. 9 and subsequent figures.

FIG. 9 is an exemplary internal block diagram of a signal processing system for a vehicle according to an embodiment of the present disclosure.

Referring to FIG. 9, a signal processing system 800 for a vehicle according to an embodiment of the present disclosure includes: a signal processing device 170a including an integrated intrusion detection processor 900 which, in response to receiving a first message based on a first communication scheme, to perform intrusion detection based on a first type (hereinafter referred to as first-type intrusion detection) on the first message, and in response to receiving a second message based on a second communication scheme, to perform intrusion detection on the second message; and a second signal processing device 170Za including a first intrusion detection processor 814Za configured to, in response to receiving the first message based on the first communication scheme, perform intrusion detection based on a second type (hereinafter referred to as second-type intrusion detection) on the first message.

In response to receiving the first message based on the second communication scheme from the outside, the integrated intrusion detection processor 900 in the signal processing device 170a can inspect a header and payload based on the second communication scheme, and then performs the intrusion detection based on a first type of the first message.

For example, the first message based on the first communication scheme can be a CAN message based on CAN communication, and the second message based on the second communication scheme can be an Ethernet message based on Ethernet communication.

Meanwhile, the first message based on the second communication scheme can be a CAN message based on Ethernet communication.

Meanwhile, the integrated intrusion detection processor 900 can include an intrusion detection processor 905 configured to perform intrusion detection on the first message, and an intrusion detection processor 908 configured to perform intrusion detection on the second message.

Meanwhile, in response to receiving the first message based on the second communication scheme, the integrated intrusion detection processor 900 in the signal processing device 170a can transmit the first message, for which the intrusion detection has been completed, and a timing exception message related to the first message to the second signal processing device 170Za.

Meanwhile, the first intrusion detection processor 814Za in the second signal processing device 170Za can perform the intrusion detection based on the second type based on a format or timing of the received first message, and in response to receiving the timing exception message from the signal processing device 170a, the first intrusion detection processor 814Za can determine that the timing of the first message is normal while performing the intrusion detection based on the second type. Accordingly, it is possible to prevent an error in intrusion detection for the first message based on the second communication scheme.

Meanwhile, the intrusion detection based on the firs type for the first message can be semantic-based intrusion detection, and the intrusion detection based on the second type for the first message can be syntax-based intrusion detection based on a format or timing.

The signal processing device 170a can be a gateway based on High Performance Computing (HPC), and the second signal processing device 170Za and 170Zb can be a zonal gateway disposed in a plurality of zones and configured to receive in-vehicle sensor signals from various sensors and to process the sensor signals.

Here, the in-vehicle sensor signal can include at least one of vehicle wheel velocity data, vehicle direction data, vehicle location data (global positioning system (GPS) data), vehicle angle data, vehicle velocity data, vehicle acceleration data, vehicle tilt data, vehicle forward/backward movement data, battery data, fuel data, tire data, vehicle lamp data, in-vehicle temperature data, in-vehicle humidity data, external vehicle camera data, in-vehicle camera data, external vehicle radar data, or external vehicle lidar data.

Meanwhile, as the number of types of in-vehicle sensor signals increases, the number of first messages to be processed by the second signal processing device 170b also increases, thereby placing an increasing burden on the second signal processing device 170b.

Accordingly, the present disclosure provides the signal processing device 170a configured to perform the intrusion detection based on a first type of the first message, and the second signal processing device 170Za configured to perform intrusion detection based on a second type of the first message.

As described above, the signal processing device 170a and the second signal processing device 170Za can process the intrusion detection for the first message in a distributed manner, thereby efficiently performing the intrusion detection on the first message. In addition, load on the second signal processing device 170Za can be reduced.

The signal processing device 170a can further comprise a Service-oriented architecture (SOA) Adaptor & Gateway 912 which operates to transmit the second message, an SOA provider 926, and an SOA consumer 922 and 924.

Meanwhile, the second signal processing device 170Za can further comprise a second intrusion detection processor 816Za configured to perform intrusion detection on the second message in response to receiving the second message based on the second communication scheme, and an SOA Adaptor & Gateway 812Za for transmitting the second message. Accordingly, intrusion detection can be performed on the received second message, or the received second message can be transmitted.

Meanwhile, the second signal processing device 170Za can further comprise a first accelerator 820Za configured to accelerate processing of the first message, and a second accelerator 830Za configured to accelerate processing of the second message. Accordingly, processing of the messages can be accelerated.

That is, the second signal processing device 170Za can further comprise an accelerator 819Za for processing messages, and the accelerator 819Za can include the first accelerator 820Za and the second accelerator 830Za.

Meanwhile, the second signal processing device 170Za can include a first processor 732aZa for processing the first message and a second processor 732bZa for processing the second message.

The first processor 732aZa can include the first intrusion detection processor 814Za, and the second processor 732bZa can include the second intrusion detection processor 816Za and the SOA Adaptor & Gateway 812Za.

The second signal processing device 170Za can exchange a CAN signal by CAN communication with the body ECU 610a, the chassis ECU 614a, the powertrain ECU 619a, and the like located in a first zone of the vehicle.

Meanwhile, the other second signal processing device 170Zb can exchange a CAN signal by CAN communication with a body ECU 610b, a chassis ECU 614b, a powertrain ECU 619b, and the like located in a second zone of the vehicle.

Meanwhile, the second signal processing device 170Za can receive a first message, including an in-vehicle sensor signal, based on the first communication scheme and perform intrusion detection on the first message, and can transmit the first message, for which the intrusion detection has been completed, to the signal processing device 170a based on the second communication scheme. Accordingly, intrusion detection can be performed on the received first message.

Meanwhile, the signal processing device 170a can control the first message based on the second communication scheme, which is received from the second signal processing device 170Za, to be transmitted to the external server 400. Accordingly, the first message, for which the intrusion detection has been completed, can be stably transmitted.

Meanwhile, the second signal processing device 170Za can perform syntax-based intrusion detection based on a format or timing of the first message, and the signal processing device 170a can perform semantic-based intrusion detection based on semantics of the first message. Accordingly, intrusion detection can be efficiently performed on the received first message.

Meanwhile, the signal processing device 170a can perform semantic-based intrusion detection based on a correlation between a plurality of first messages received from the plurality of second signal processing devices 170Za and 170Zb. Accordingly, intrusion detection can be efficiently performed on the received first message.

Meanwhile, the second signal processing device 170Za can detect whether intrusion is detected in the first message based on a message ID, data length, and signal range of the first message, or a generation period of the first message, and the signal processing device 170a can detect whether intrusion is detected in the first message based on a message sequence, a range of increase or decrease in signal, a signal state, or a signal correlation in the first message. Accordingly, intrusion detection can be efficiently performed on the received first message.

Meanwhile, if a vehicle speed range in the first message exceeds an allowable value, the second signal processing device 170Za can detect the first message as the message corresponding to the intrusion detection based on the second type. Accordingly, intrusion detection can be efficiently performed on the received first message.

Meanwhile, if a range of increase or decrease in vehicle speed in the first message exceeds an allowable range of increase or decrease, the signal processing device 170a can detect the first message as the message corresponding to the intrusion detection based on the firs type. Accordingly, intrusion detection can be efficiently performed on the received first message.

Meanwhile, upon detecting intrusion in the first message or the second message, the integrated intrusion detection processor 900 or the first intrusion detection processor 814Za can drop the first message or the second message, thereby stably managing the messages.

FIGS. 10A to 15 are diagrams referred to in the description of FIG. 9.

FIG. 10A is a diagram illustrating various examples of a first message transmitted based on a second communication scheme.

In FIG. 10A, (a) illustrates a first message 1010 received from an external server 400 and transmitted based on the second communication scheme.

The first message 1010 transmitted based on the second communication scheme in (a) of FIG. 10A includes a payload and a header 1020 based on the second communication scheme, and can include a control message 1015 in the case in which the payload and the header are extracted.

In FIG. 10A, (b) illustrates a first message 1010b transmitted to the external server 400 based on the second communication scheme.

The second message 1010b transmitted based on the second communication scheme in (b) of FIG. 10A can include an in-vehicle sensor signal.

To this end, the first intrusion detection processor 814Za in the second signal processing device 170Za can perform intrusion detection on the sensor signal from the in-vehicle sensor, and the SOA Adaptor & Gateway 812Za can add a payload and a header 1020 based on the second communication scheme for Ethernet communication, and can transmit the message to the signal processing device 170a.

Meanwhile, the second message 1010b transmitted based on the second communication scheme in (b) of FIG. 10A can include a payload 1016 and a header 1018 based on the first communication in the case in which the payload and the header 1020 are extracted.

FIG. 10B is a diagram illustrating a range of message detection by the integrated intrusion detection processor 900.

Referring to FIG. 10B, in the case of a message based on the second communication scheme, a physical layer L1, a data link layer L2, an IP layer L3, a TCP/UDP layer L4, and some parts L5 and L6 of SOME/IP layer L5-L7 are processed by the intrusion detection processor 908 that performs intrusion detection on the second message in the integrated intrusion detection processor 900, and in the case of a CAN message which is another part L7 of the SOME/IP layer L5- L 7, can be processed by the intrusion detection processor 905 that performs intrusion detection on the first message. Accordingly, the first message based on the second communication scheme can be efficiently performed.

FIG. 10C is a diagram referred to in the description of operation of a first message intrusion detection processor 1040.

Referring to FIG. 10C, the first message intrusion detection processor 1040 can detect whether intrusion is detected in the first message based on a message ID 1042, a data length 1044, and a signal range 1046 of the first message, or a generation period of the first message. Accordingly, intrusion detection can be stably performed on the first message.

Meanwhile, the first message intrusion detection processor 1040 can be the intrusion detection processor 905 in the integrated intrusion detection processor 900 of FIG. 9 or the first intrusion detection processor 814Za in the second signal processing device 170Za.

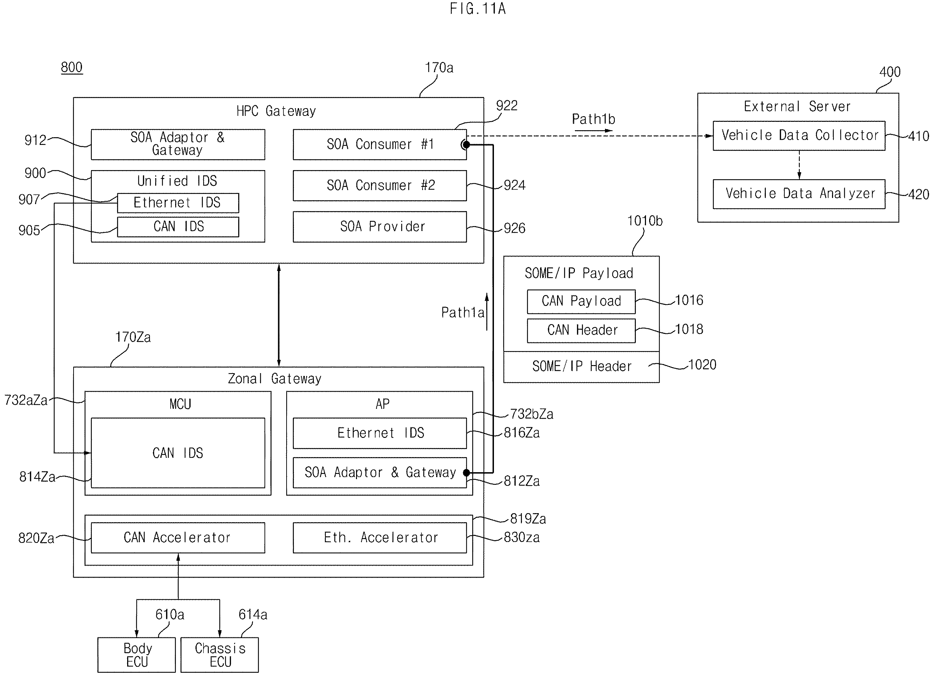

FIG. 11A is a diagram illustrating an example of transmitting a first message based on second communication to the external server 400.

Referring to FIG. 11A, a sensor signal of a body module 610a or a chassis module 614a and the like is transmitted as a first message 1010b based on the second communication scheme to the SOA consumer 922 of the signal processing device 170a along a path Path1a as illustrated herein, in such a manner that the first accelerator 820Za and the first intrusion detection processor 814Za in the second signal processing device 170Za perform intrusion detection on the first message, and the SOA Adaptor & Gateway 812Za adds the payload and the header 1020 based on the second communication scheme.

The first message 1010b based on the second communication scheme can include the CAN payload 1016 and the CAN header 1018 as illustrated in (b) of FIG. 10A.

Meanwhile, the SOA consumer 922 of the signal processing device 170a can transmit the first message 1010b based on the second communication scheme, including the sensor signal, to the external server 400.

A data collector 410 of the external server 400 can receive the first message 1010b based on the second communication scheme, and a data analyzer 420 of the external server 400 can analyze the first message 1010b based on the second communication scheme.

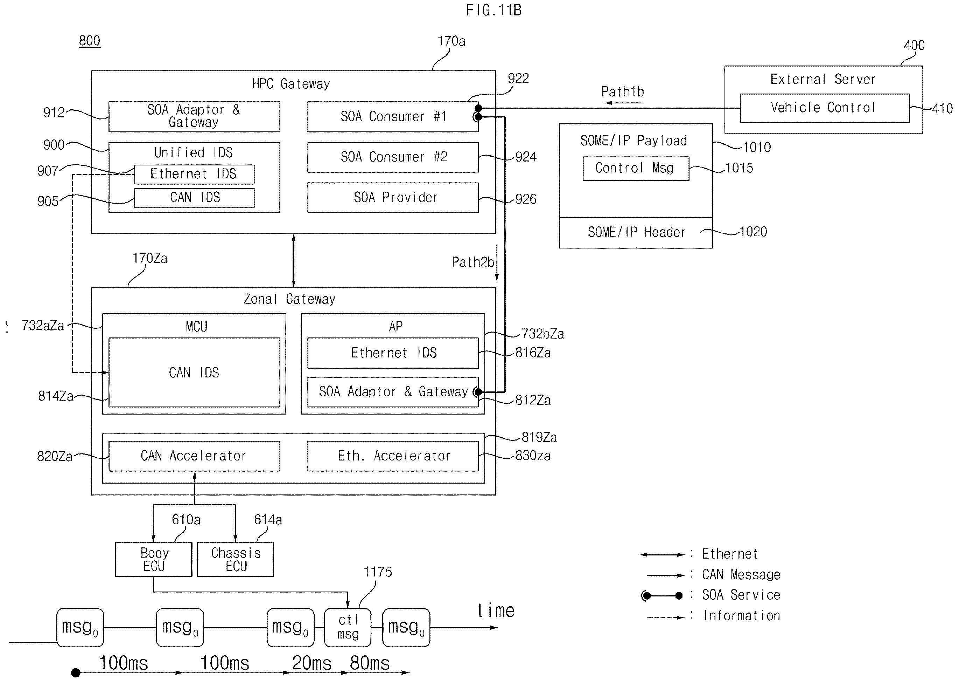

FIG. 11B is a diagram illustrating an example of processing the first message based on the second communication scheme which is received from the external server 400.

Referring to FIG. 11B, the external server 400 can transmit the first message 1010 based on the second communication scheme, including a control signal, to the signal processing device 170a.

In response thereto, the SOA consumer 922 of the signal processing device 170a can receive the first message 1010 based on the second communication scheme, including the control signal, and transmit the first message to the SOA Adaptor & Gateway 812Za in the second signal processing device 170Za along a path Path1b illustrated in FIG. 11B.

The SOA Adaptor & Gateway 812Za in the second signal processing device 170Za removes a payload and header based on the second communication scheme, and transmits the control signal as the first message to the first intrusion detection processor 814Za, and the first intrusion detection processor 814Za performs intrusion detection on the control signal which is the first message.

Meanwhile, in the case in which the control signal as the first message is a normal signal, the control signal can pass through the first accelerator 820Za in the second signal processing device 170Za to be transmitted to the body module 610a or the chassis module 614a and the like in the vehicle 100.

Meanwhile, the first intrusion detection processor 814Za can perform intrusion detection by periodically receiving the sensor signal as the first message from the body module 610a or the chassis module 614a and the like in the vehicle 100.

In the drawing, an example is illustrated in which the first intrusion detection processor 814Za receives the sensor signal every 100 ms, and performs intrusion detection based on the timing of the sensor signal, and then, receives a control signal 1175 from the external server 400 after a period of 20 ms, rather than a periodic interval of 100 ms.

In this case, the first intrusion detection processor 814Za can falsely detect the received control signal as an intrusion message, based on an anomalous timing.

Accordingly, the present disclosure provides the integrated intrusion detection processor 900 of the signal processing device 170a which receives the first message 1010 based on the second communication scheme, including the control signal from the SOA consumer 922, and performs intrusion detection based on the first type of the first message after inspecting and removing the header and payload based on the second communication scheme.

In this case, the integrated intrusion detection processor 900 performs semantic-based intrusion detection, rather than syntax-based intrusion detection based on the format or timing of the first message, and thus determines the control signal as a normal message.

Accordingly, upon completing intrusion detection for the first message 1010 based on the second communication scheme including the control signal, the integrated intrusion detection processor 900 can transmit the first message, for which intrusion detection has been completed, and a timing exception message related to the first message to the second signal processing device 170Za.

Meanwhile, upon receiving the timing exception message from the signal processing device 170a, the first intrusion detection processor 814Za in the second signal processing device 170Za determines the message as a normal message even when receiving the message after a period of 20 ms, rather than a periodic interval of 100 ms. Accordingly, it is possible to prevent false detection that occurs due to the timing of the message.

For example, the control signal can be a door lock signal or door unlock signal and the like from the external server 400 or a mobile terminal (not shown), and even when the door lock signal or door unlock signal is received at another time, rather than a periodic interval, the signal can be determined as a normal signal, such that a door lock operation or door unlock operation in the vehicle can be stably performed.

In another example, the control signal can be a remote start signal or an air-conditioner control signal and the like from the external server 400 or a mobile terminal (not shown), and even when the remote start signal or the air-conditioner control signal is received at another time, rather than a periodic interval, the signal can be determined as a normal signal, such that a remote start operation or air-conditioner control operation in the vehicle can be stably performed.

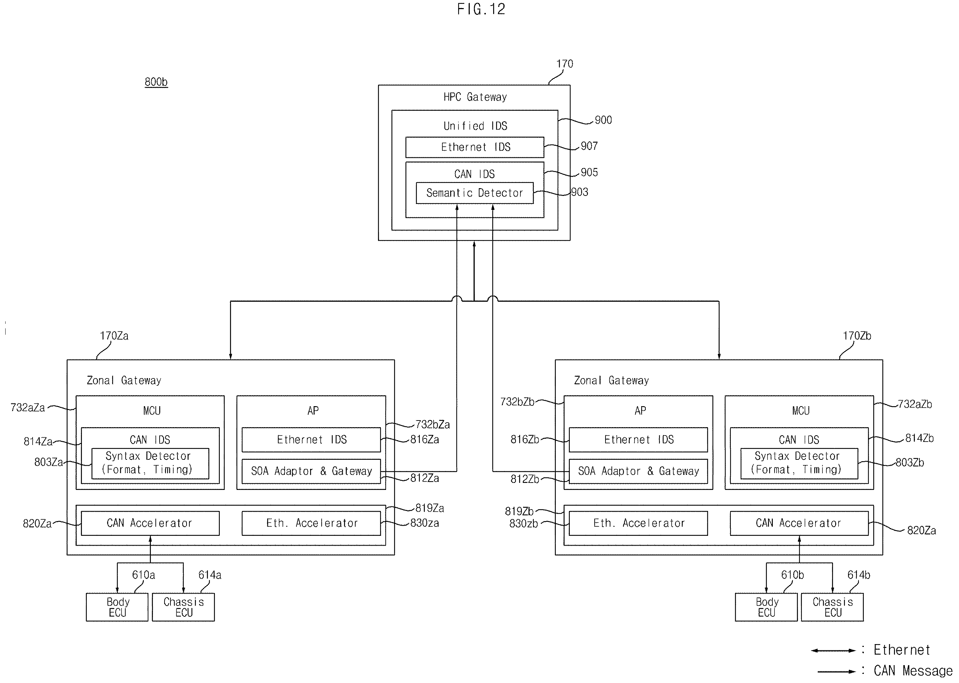

FIG. 12 is a diagram referred to in the description of operation of the integrated intrusion detection processor 900.

Referring to FIG. 12, the signal processing device 170a can receive a CAN message, which is a first message, from each of the plurality of second signal processing devices 170Za and 170Zb.

The plurality of second signal processing devices 170Za and 170Zb include first intrusion detection processors 814Za and 814Zb and second intrusion detection processors 816Za and 816Zb, respectively.

In the case in which each of the plurality of second signal processing devices 170Za and 170Zb receives a sensor signal from a sensor device in each zone, the first intrusion detection processors 814Za and 814Zb perform syntax-based intrusion detection based on the format or timing of the first message, and the integrated intrusion detection processor 900 in the signal processing device 170a performs semantic-based intrusion detection based on semantics of a plurality of sensor signals.

In this case, while performing semantic-based intrusion detection based on the semantics of the plurality of sensor signals, the integrated intrusion detection processor 900 in the signal processing device 170a can also analyze a correlation between the plurality of sensor signals.

For example, in the case in which the sensor signal from each of the plurality of second signal processing devices 170Za and 170Zb is a vehicle speed signal, and a difference in vehicle speed exceeds a reference value, the second signal processing devices 170Za and 170Zb can determine that the signal is abnormal.

In another example, in the case in which the sensor signal from each of the plurality of second signal processing devices 170Za and 170Zb is a vehicle steering signal, and a difference in vehicle steering signal exceeds a reference value, the second signal processing devices 170Za and 170Zb can determine that the signal is abnormal.

As described above, by analyzing a correlation between the plurality of sensor signals in addition to analyzing the respective sensor signals, intrusion detection can be performed more accurately.

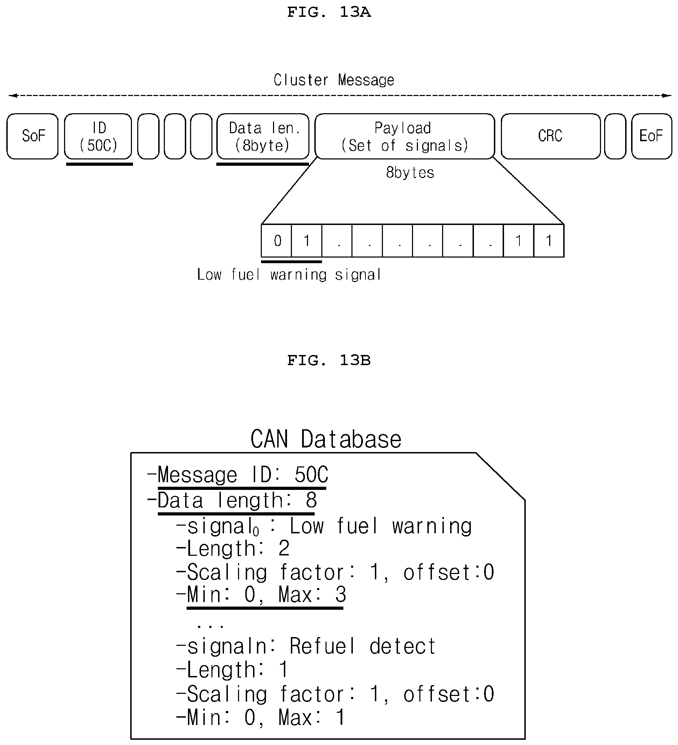

FIGS. 13A to 14B are diagrams referred to in the description of operation of the first intrusion detection processor 814Za in the second signal processing device 170Za.

FIG. 13A is a diagram illustrating an example of a cluster message, which is a first message, for format-based detection.

Referring to FIG. 13A, the first intrusion detection processor 814Za in the second signal processing device 170Za can detect whether intrusion is detected in the first message based on a message ID, data length, and signal range of the first message, or a generation period of the first message.

In the drawing, a message ID, 8-byte data length, 8-byte payload, and the like in the cluster message are illustrated.

Meanwhile, a portion of the 8-byte payload can include a low fuel warning signal, as illustrated herein.

FIG. 13B is a diagram illustrating detailed information of the cluster message of FIG. 13A.

Referring to FIG. 13B, the message ID is 50 C, the data length is 8, and the signal range is from 0 to 3.

Meanwhile, if the message ID, data length, or signal range of the first message is changed, the first intrusion detection processor 814Za in the second signal processing device 170Za can detect the first message as the message corresponding to the intrusion detection based on the firs type.

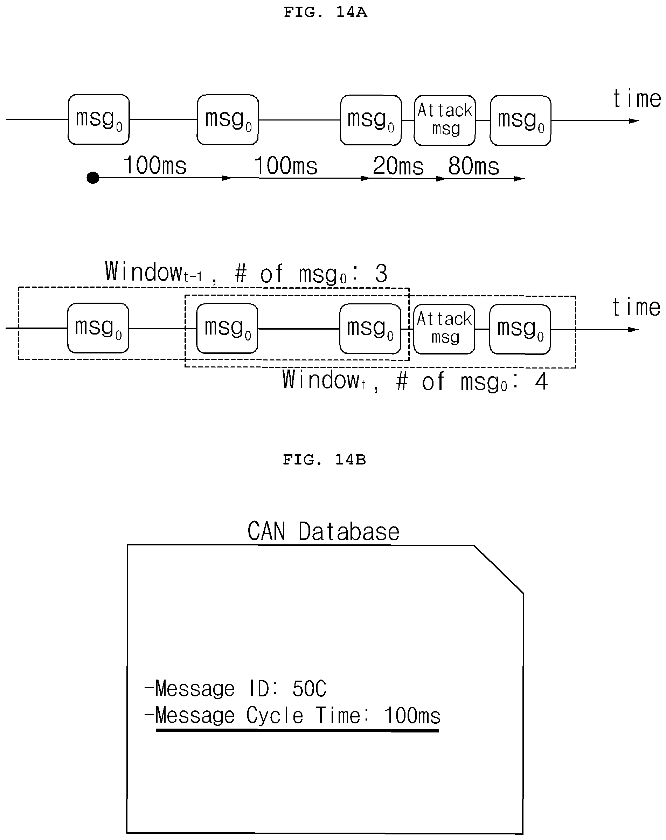

FIG. 14A is a diagram illustrating an example in which a message reception interval of the first message varies for timing-based detection.

Referring to FIG. 14A, while the reception interval of the first message is 100 ms, reception intervals of 20 ms and 80 ms appear in the message due to an attack message.

Accordingly, the first intrusion detection processor 814Za in the second signal processing device 170Za can detect whether intrusion is detected in the first message based on the generation period or the reception interval of the first message.

That is, the first intrusion detection processor 814Za in the second signal processing device 170Za can detect the message, having the reception interval of 20 ms, as the message corresponding to the intrusion detection based on the firs type.

FIG. 14B is a diagram illustrating detailed information of the message of FIG. 14A.

Referring to FIG. 14B, the message ID in the message is 50 C, and the message cycle time is 100 ms.

Meanwhile, if the message cycle time is changed, the first intrusion detection processor 814Za in the second signal processing device 170Za can detect the message as the message corresponding to the first type intrusion detection.

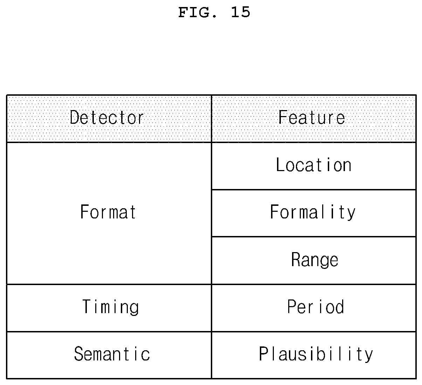

FIG. 15 is a diagram illustrating various types of attacks.

Referring to FIG. 15, the first intrusion detection processor 814Za in the second signal processing device 170Za can detect, based on a format and timing of a message, whether the message is a message corresponding to the intrusion detection based on the second type, and the integrated intrusion detection processor 900 in the signal processing device 170a can detect, based on semantics of the message, whether the message is a message corresponding to the intrusion detection based on the firs type.

With respect to location, the first intrusion detection processor 814Za in the second signal processing device 170Za can detect based on the message ID whether a message is a message in which intrusion is detected (hereinafter referred to as an intrusion detected message).

For example, if a CAN ID, such as 0×00 which is not allowed and can cause bus load, appears in a message, the first intrusion detection processor 814Za in the second signal processing device 170Za can detect the message as the intrusion detected message.

With respect to formality, the first intrusion detection processor 814Za in the second signal processing device 170Za can detect whether a message is the intrusion detected message based on a message length.

For example, if a message length is changed to a value greater than a designated data length code (DLC) value which can cause buffer overflow in the ECU, the first intrusion detection processor 814Za in the second signal processing device 170Za can detect the message as the intrusion detected message.

With respect to a range, the first intrusion detection processor 814Za in the second signal processing device 170Za can detect whether a message is the intrusion detected message based on a range in the message.

For example, if vehicle speed information in the first message is 300 km/h with a vehicle speed range exceeding an allowable value, the first intrusion detection processor 814Za in the second signal processing device 170Za can detect the message as the intrusion detected message.

With respect to a period, the first intrusion detection processor 814Za in the second signal processing device 170Za can detect whether a message is the intrusion detected message based on a message generation period.

For example, if a period of a received first message is changed, omitted, or delayed, the first intrusion detection processor 814Za in the second signal processing device 170Za can detect the message as the intrusion detected message.

Meanwhile, with respect to plausibility, the integrated intrusion detection processor 900 in the signal processing device 170a can detect whether a message is the intrusion detected message based on the plausibility of the message.

For example, if the vehicle speed changes from 20 km/h to 200 km/h, the integrated intrusion detection processor 900 in the signal processing device 170a can detect the message as the intrusion detected message based on the plausibility.

As described above, the signal processing device 170a and the second signal processing device 170Za can process the first messages in a distributed manner, thereby efficiently performing intrusion detection on the first message. In addition, the load on the second signal processing device 170Za can be reduced.

It will be apparent that, although the preferred embodiments have been shown and described above, the present disclosure is not limited to the above-described specific embodiments, and various modifications and variations can be made by those skilled in the art without departing from the gist of the appended claims. Thus, it is intended that the modifications and variations should not be understood independently of the technical spirit or prospect of the present disclosure.

## Claims

1. A signal processing system comprising:
a signal processing device comprising an integrated intrusion detection processor configured to, in response to receiving a first message based on a first communication scheme, perform intrusion detection based on a first type of the first message, and in response to receiving a second message based on a second communication scheme, to perform intrusion detection on the second message; and
a second signal processing device comprising a first intrusion detection processor configured to, in response to receiving the first message based on the first communication scheme, perform intrusion detection based on a second type of the first message,
wherein in response to receiving a first message based on the second communication scheme from an external source, the integrated intrusion detection processor in the signal processing device is configured to perform the intrusion detection based on the first type of the first message after inspecting a header and payload based on the second communication scheme.

2. The signal processing system of claim 1, wherein in response to receiving the first message based on the second communication scheme, the integrated intrusion detection processor in the signal processing device is configured to transmit the first message, for which the intrusion detection has been completed, and a timing exception message related to the first message to the second signal processing device.

3. The signal processing system of claim 1, wherein the first intrusion detection processor in the second signal processing device is configured to perform the intrusion detection based on the second type based on a format or timing of the received first message, and, in response to receiving the timing exception message from the signal processing device, determine that the timing of the first message is normal while performing the intrusion detection based on the second type.

4. The signal processing system of claim 1, wherein the second signal processing device further comprises a second intrusion detection processor configured to, in response to receiving the second message based on the second communication scheme, perform intrusion detection on the second message.

5. The signal processing system of claim 1, wherein the second signal processing device is configured to receive a first message including an in-vehicle sensor signal based on the first communication scheme and perform intrusion detection on the first message, and to transmit the first message, for which the intrusion detection has been completed, based on the second communication scheme.

6. The signal processing system of claim 5, wherein the signal processing device is configured to transmit the first message based on the second communication scheme, which is received from the second signal processing device, to an external server.

7. The signal processing system of claim 1, wherein the second signal processing device is configured to perform syntax-based intrusion detection based on a format or timing of the first message, and
wherein the signal processing device is configured to perform semantic-based intrusion detection based on semantics of the first message.

8. The signal processing device of claim 1, wherein the signal processing device is configured to perform semantic-based intrusion detection based on a correlation between a plurality of first messages received from a plurality of second signal processing devices.

9. The signal processing system of claim 1, wherein the second signal processing device is configured to detect whether intrusion is detected in the first message based on a message ID, data length, and signal range of the first message, or a generation period of the first message, and
wherein the signal processing device is configured to detect whether intrusion is detected in the first message based on a message sequence, a range of increase or decrease in signal, a signal state, or a signal correlation in the first message.

10. The signal processing system of claim 1, wherein in response to a vehicle speed range in the first message exceeding an allowable value, the second signal processing device is configured to detect the first message as a message corresponding to the intrusion detection based on the second type.

11. The signal processing system of claim 1, wherein in response to a range of increase or decrease in vehicle speed in the first message exceeding an allowable range of increase or decrease, the signal processing device is configured to detect the first message as a message corresponding to the intrusion detection based on the firs type.

12. The signal processing system of claim 4, wherein the second signal processing device further comprises:
a first accelerator configured to accelerate processing of the first message; and
a second accelerator configured to accelerate processing of the second message.

13. The signal processing system of claim 1, wherein upon detecting intrusion in the first message or the second message, the integrated intrusion detection processor or the first intrusion detection processor is configured to drop the first message or the second message.

14. A signal processing system comprising:
a signal processing device comprising an integrated intrusion detection processor configured to, in response to receiving a first message based on a first communication scheme, perform intrusion detection based on a first type of the first message, and in response to receiving a second message based on a second communication scheme, to perform intrusion detection on the second message; and
a second signal processing device comprising a first intrusion detection processor configured to, in response to receiving the first message based on the first communication scheme, perform intrusion detection based on a second type of the first message,
wherein the second signal processing device is configured to receive a first message including an in-vehicle sensor signal based on the first communication scheme and perform intrusion detection on the first message, and to transmit the first message, for which the intrusion detection has been completed, based on the second communication scheme.

15. The signal processing system of claim 14, wherein the signal processing device is configured to transmit the first message based on the second communication scheme, which is received from the second signal processing device, to an external server.

16. The signal processing system of claim 14, wherein the first intrusion detection processor in the second signal processing device is configured to perform the intrusion detection based on the second type based on a format or timing of the received first message, and, in response to receiving the timing exception message from the signal processing device, determine that the timing of the first message is normal while performing the intrusion detection based on the second type.

17. The signal processing system of claim 14, wherein the second signal processing device further comprises a second intrusion detection processor configured to, in response to receiving the second message based on the second communication scheme, perform intrusion detection on the second message.

18. A vehicle comprising the signal processing system of any one of claims 1 to 17.
